Europäisches Patentamt

European Patent Office

Office européen des brevets

(19)

(11) Numéro de publication : **0 604 276 A1**

# (12) DEMANDE DE BREVET EUROPEEN

(21) Numéro de dépôt : **93403057.8**

(22) Date de dépôt : **16.12.93**

(51) Int. Cl.⁵ : **G01N 21/47,** G01J 3/51

(30) Priorité : **22.12.92 FR 9215452**

(43) Date de publication de la demande :
**29.06.94 Bulletin 94/26**

(84) Etats contractants désignés :
**AT BE CH DE DK ES FR GB GR IE IT LI NL PT SE**

(71) Demandeur : **BERTIN & CIE**
**BP no. 3**
**F-78373 Plaisir Cedex (FR)**

(72) Inventeur : **Vieillefosse, Michel**
**L'Armelière,**
**28, Route des Milles**
**F-13090 Aix en provence (FR)**
Inventeur : **Belle, Olivier**
**Montée des Tartannes**
**F-13790 Rousset (FR)**

(74) Mandataire : **Ramey, Daniel et al**
**Cabinet Ores**
**6 Avenue de Messine**
**F-75008 Paris (FR)**

(54) **Procédé et dispositf de détermination de la couleur d'un objet transparent, diffusant et absorbant, tel en particulier qu'une dent.**

(57)    Procédé et dispositif de détermination de la couleur d'un objet transparent, diffusant et absorbant, par éclairage d'une surface de l'objet au moyen d'un flux lumineux diffus sensiblement homogène et isotrope, captation de la lumière rétrodiffusée par une petite partie de la surface éclairée de l'objet, au moyen d'un système optique comprenant des doublets achromatiques (24), des filtres (26) infrarouge et ultraviolet et un diaphragme (28), et analyse spectrale de cette lumière au moyen de filtres interférentiels (34) et de photodétecteurs (36).

L'invention s'applique en particulier à la détermination de la couleur des dents en bouche.

FIG.1

EP 0 604 276 A1

L'invention concerne un procédé et un dispositif de détermination de la couleur d'un objet transparent, diffusant et absorbant, tel en particulier qu'une dent en bouche.

Il a déjà été proposé de procéder à cette détermination en éclairant la surface de l'objet ou de la dent par un flux lumineux polychromatique, en captant la lumière rétrodiffusée par cet objet ou par cette dent, et en analysant spectralement la lumière captée, pour déterminer notamment la réflectance spectrale de l'objet ou de la dent.

La connaissance de cette réflectance spectrale permet en principe de déterminer sans risque d'erreur et notamment sans risque de métamérisme la couleur à donner à une prothèse dentaire destinée à être implantée à côté de la dent sur laquelle on a fait la mesure, ou bien la couleur à donner à une série d'objets reproduisant l'objet sur lequel on a fait les mesures.

Il est cependant apparu en pratique un certain nombre de difficultés de mise en oeuvre de ce principe connu, qui conduisent à des différences de couleur relativement importantes entre une dent en bouche et une prothèse dentaire ou entre un objet et des reproductions de cet objet.

Ces différences sont dues, pour une part, aux caractéristiques de sensibilité de l'oeil humain et, pour une autre part, à la nature plus ou moins transparente, diffusante et absorbante, des dents ou des objets que l'on veut reproduire.

Ces difficultés sont encore accentuées dans le cas de la fabrication des prothèses dentaires, car les dents naturelles sont en général plus transparentes que les dents artificielles.

Pour résoudre ces problèmes, le Demandeur a déjà mis au point un procédé de détermination de la couleur d'un objet transparent ou translucide, tel qu'une dent en bouche, qu'il a protégé par la Demande de Brevet Français 91 15984 dont le contenu est incorporé ici par référence.

En résumé, le procédé décrit dans cette Demande de Brevet Français consiste essentiellement à mesurer la réflectance de l'objet ou de la dent à des longueurs d'onde correspondant aux maxima de sensibilité de l'oeil humain en teinte et en saturation, et à déduire de ces mesures un indicateur de restitution de transparence de l'objet, ainsi qu'un coefficient de saturation de la couleur de l'objet vue par l'oeil humain et les pigmentations de cette couleur par rapport au blanc dans des intervalles prédéterminés de longueurs d'onde.

On utilise de préférence, en particulier lorsque l'objet est une dent en bouche, un illuminant qui est l'éclairement diffus normalisé de la lumière solaire, on mesure la réflectance de la dent à des longueurs d'onde sensiblement égales à 440, 495, 520, 577 et 600 nm, et on détermine les pigmentations de la couleur de l'objet par rapport au blanc dans des intervalles de longueurs d'onde compris respectivement entre 400 et 550 nm environ et entre 550 et 650 nm environ.

Ce procédé permet de déterminer de façon exacte la couleur d'une dent, puis de comparer cette couleur déterminée à des couleurs connues d'un teintier ou d'un nuancier, par comparaison du pourcentage de saturation de la couleur de la dent aux pourcentages de saturation correspondants des couleurs du teintier ou du nuancier, et par comparaison des pigmentations de la couleur de la dent aux pigmentations correspondantes des couleurs du teintier ou du nuancier, et enfin par comparaison de la luminance d'un objet blanc incluse dans la luminance de la dent aux luminances d'un objet blanc incluses dans les luminances des couleurs du teintier ou du nuancier.

La présente invention a notamment pour objet de faciliter la mise en oeuvre de ce procédé et son utilisation par des dentistes ou par du personnel qui n'est pas spécialisé dans les mesures colorimétriques.

Elle a également pour objet un procédé et un dispositif permettant de déterminer la couleur d'un objet transparent, diffusant et absorbant, avec une grande précision et sans risque d'erreur de manipulation.

Elle propose donc, à cet effet, un procédé de détermination de la couleur d'un objet transparent, diffusant et absorbant, tel en particulier qu'une dent en bouche, consistant à éclairer une surface de l'objet par un flux lumineux polychromatique, à capter la lumière rétrodiffusée par l'objet et à analyser spectralement la lumière captée, caractérisé en ce qu'il consiste à utiliser un flux lumineux diffus sensiblement homogène et isotrope pour éclairer ladite surface de l'objet, à viser dans la surface éclairée une zone ayant des dimensions nettement inférieures à celles de cette surface éclairée et qui est approximativement centrée sur la surface éclairée, à former l'image de cette zone sur des moyens d'analyse spectrale, et à déterminer l'intensité de la lumière rétrodiffusée par l'objet pour un nombre relativement faible de longueurs d'onde ayant des valeurs prédéterminées et correspondant de préférence aux maxima de sensibilité de l'oeil humain en teinte et en saturation.

Le fait d'éclairer une surface de l'objet qui est relativement importante par rapport à la zone de mesure, permet de s'affranchir des effets de bord résultant de la diffusion et de l'absorption de la lumière dans l'épaisseur de l'objet. Il importe en effet que la zone de mesure ne soit pas soumise à ces effets de bord, qui se traduisent par des variations de la couleur perçue par l'oeil humain ou par des détecteurs d'un dispositif de mesure.

Conformément à l'invention, les dimensions de la surface éclairée et de la zone visée de l'objet satisfont à la relation $d2 > d1 + 2Dm$, où $d2$ est une dimension ou un diamètre de la surface éclairée, $d1$ est une dimension correspondante ou un diamètre de la zone visée et $Dm$ est une valeur minimale d'une dimension correspondante d'une surface d'éclairement de l'objet, déterminée expérimentalement par observation des variations de couleur de l'objet sur une coupe de celui-ci.

Dans le cas d'une dent naturelle, on détermine ainsi une valeur Dm égale à environ 2 mm.

Il résulte que la surface éclairée d'une dent doit avoir un diamètre égal à au moins 5 mm lorsque le diamètre de la zone visée de la surface de la dent est d'environ 1 mm.

Par ailleurs, l'invention prévoit également que l'axe du flux lumineux d'éclairement et l'axe du système optique captant la lumière rétrodiffusée par l'objet sont sensiblement confondus et perpendiculaires à la surface éclairée de l'objet.

Pour faciliter les mesures, l'invention prévoit également que le flux lumineux diffus d'éclairement de l'objet est à symétrie axiale de révolution.

Les mesures sont ainsi indépendantes de la position angulaire des moyens de mesure autour de l'axe du flux lumineux d'éclairement.

L'invention propose également un dispositif de détermination de la couleur d'un objet transparent, diffusant et absorbant, tel en particulier qu'une dent en bouche, comprenant des moyens d'éclairage d'une surface de l'objet par un flux lumineux polychromatique, des moyens de captation de la lumière rétrodiffusée par l'objet et des moyens d'analyse spectrale de la lumière captée, caractérisé en ce qu'il comprend un tube à surface interne diffusante dont une extrémité ouverte est destinée à être orientée vers l'objet à éclairer, une source lumineuse logée dans le tube, un système optique agencé dans le tube au voisinage de son extrémité ouverte pour capter la lumière pénétrant dans le tube par cette extrémité et former une image d'une zone réduite de la surface de l'objet sur les moyens d'analyse spectrale, ces derniers étant logés avec le système optique dans un boîtier disposé dans le tube et formant un écran opaque interposé entre la source lumineuse et l'extrémité ouverte du tube, le tube étant de plus muni d'une poignée contenant des moyens d'alimentation électrique et des moyens de commande de la source lumineuse.

Un tel dispositif permet d'éclairer une surface relativement importante d'un objet par un flux lumineux diffus sensiblement homogène et isotrope, et de capter la lumière rétrodiffusée par une zone très réduite de la surface éclairée de l'objet, en application du procédé qui vient d'être décrit. De plus, ce dispositif est aisément manipulable et peut être utilisé d'une seule main.

Selon une autre caractéristique de l'invention, le système optique comprend, de l'extrémité ouverte du tube aux moyens d'analyse spectrale, deux doublets achromatiques entre lesquels sont disposés deux filtres infrarouge et ultraviolet, puis un diaphragme sur lequel est formée l'image de la surface éclairée de l'objet, un troisième doublet achromatique recevant le flux lumineux passant par le diaphragme et générant un faisceau de rayons sensiblement parallèles, puis un ensemble de lames séparatrices suivies d'un miroir, orientés en oblique sur l'axe du système optique pour partager ledit faisceau de rayons parallèles en sous-faisceaux parallèles dirigés vers les moyens d'analyse spectrale.

Ce système optique présente l'avantage de ne pas comprendre de fibres optiques et d'éviter tous les problèmes que pose leur utilisation (vieillissement, couplage, torsion, courbure, transmission, etc.).

Selon encore une autre caractéristique de l'invention, les moyens d'analyse spectrale comprennent des filtres interférentiels qui sont chacun accordés sur une longueur d'onde déterminée et qui sont disposés sur le trajet d'un sous-faisceau précité, et des photodétecteurs agencés en sortie des filtres interférentiels.

Avantageusement, le tube comprend également des moyens de calibrage, comprenant une plaquette de matériau diffusant ou de référence, recevant la lumière diffusée par la surface interne du tube, et des moyens optiques et d'analyse spectrale sensiblement identiques aux moyens précités et recevant la lumière rétrodiffusée par ladite plaquette.

Enfin, ce dispositif comprend un embout amovible en matériau transparent, comprenant une base de fixation sur l'extrémité ouverte du tube et des doigts obliques convergents dont les extrémités libres sont destinées à être appliquées sur l'objet en délimitant entre elles la surface éclairée de l'objet, et en délimitant également entre l'objet et le système optique du tube une distance égale à la distance focale de la première lentille du système optique captant la lumière rétrodiffusée par l'objet.

L'utilisation de cet embout facilite l'emploi du dispositif et améliore la précision des mesures.

Dans la description qui suit, faite à titre d'exemple, on se réfère aux dessins annexés dans lesquels :

- la figure 1 est une vue schématique en coupe axiale d'un dispositif selon l'invention ;
- la figure 2 est une vue de face, à plus grande échelle, de l'embout de ce dispositif ;
- la figure 3 illustre schématiquement le procédé de détermination expérimentale des dimensions minimales de la surface éclairée d'un objet.

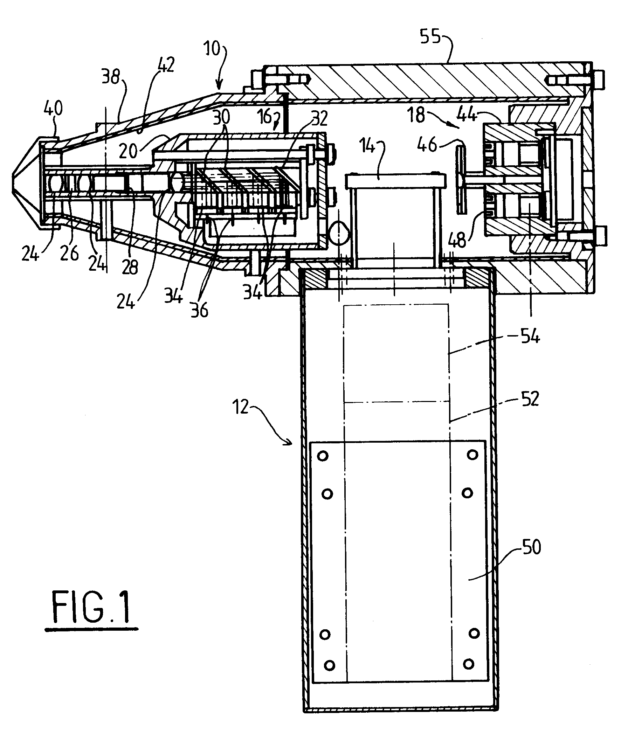

On se réfère d'abord à la figure 1, dans laquelle on a représenté schématiquement, en coupe axiale, un mode de réalisation d'un dispositif selon l'invention comprenant un boîtier constitué essentiellement d'un tube 10 associé à une poignée 12.

Le tube 10 contient une source lumineuse 14 telle qu'une lampe halogène ou une lampe à éclair, un ensemble de mesure 16 et un ensemble de calibrage 18. L'ensemble de mesure 16 est logé dans la partie avant du tube 10, et comprend un boîtier 20 dans lequel sont logés un système optique et des moyens d'analyse spectrale de la lumière. Le système optique comprend, à l'intérieur d'un tube 22 formant la partie avant du boîtier 20, deux doublets achromatiques 24 entre lesquels sont disposés deux filtres infrarouge et ultraviolet 26 et qui sont suivis d'un diaphragme 28 dont l'orifice central est de faible dimension. Un troisième doublet achromatique 24 est disposé derrière le diaphragme 28 pour générer un faisceau de rayons sensiblement parallèles sur un ensemble de trois lames séparatrices 30 suivies d'un miroir 32, les lames séparatrices 30 et le miroir 32 étant orientés en oblique sur l'axe du système optique pour partager le faisceau de rayons parallèles produit par le troisième doublet achromatique 24 en quatre sous-faisceaux orientés vers quatre filtres interférentiels 34 accordés chacun sur une longueur d'onde particulière et transmettant la lumière vers un photodétecteur associé 36.

Cet ensemble de mesure 16 est disposé axialement dans la partie avant tronconique 38 du tube 10 dont l'extrémité avant ouverte reçoit un embout 40 d'application sur une surface d'un objet dont on veut déterminer la couleur.

Les dimensions de l'embout 40 sont telles que, lorsqu'il est appliqué sur l'objet, celui-ci est placé au foyer de la première lentille du système optique.

Pour que l'objet puisse être éclairé par un flux lumineux diffus sensiblement homogène et isotrope, la lampe 14 est placée sur l'axe du tube 10, derrière le boîtier 20 de l'ensemble de mesure 16 qui forme un écran opaque entre cette lampe et l'extrémité avant ouverte du tube 10. De plus, toute la surface interne du tube 10 comprend un revêtement interne 42 de matière diffusante, ce revêtement étant lui-même déposé sur une sous-couche à réflexion miroir.

L'ensemble de calibrage 18 comporte un boîtier 44 logé dans la partie arrière du tube 10 et fermant l'extrémité arrière de ce tube. Ce boîtier 44 porte une plaquette 46, orientée vers l'arrière du tube 10 par rapport à la lampe 14 pour n'être éclairée que par la lumière diffusée par le revêtement interne 42 du tube 10, le boîtier 44 comportant par ailleurs quatre voies parallèles de captation et d'analyse spectrale de la lumière rétrodiffusée par la plaquette 46, chaque voie comprenant un diaphragme 48, deux filtres infrarouge et ultraviolet, un filtre interférentiel accordé sur la même longueur d'onde que l'un des filtres 34 de l'ensemble de mesure 16, et un photodétecteur recevant la lumière transmise par ce filtre interférentiel. Les photodétecteurs de l'ensemble 18 de calibrage, comme les photodétecteurs 36 de l'ensemble 16 de mesure, sont montés sur une carte électronique de préamplification.

La plaquette 46 peut être en une matière identique à celle du revêtement 42, ou en un matériau étalon de référence.

La poignée 12 du dispositif contient une carte 50 à microprocesseur pour le traitement des signaux de sortie des photodétecteurs de l'ensemble de mesure 16 et de l'ensemble de calibrage 18, ainsi que des accumulateurs électriques 52 du type rechargeable et un boîtier 54 d'alimentation de la lampe 14.

Par ailleurs, le dispositif comprend encore un écran de visualisation et un clavier de commande, montés par exemple en 55 sur la face supérieure du tube 10 et/ou sur la poignée 12.

Ce dispositif fonctionne de la façon suivante :

L'embout 40 monté à l'extrémité avant du tube 10 est appliqué sur la surface d'un objet dont on veut déterminer la couleur. Par commande de la lampe 14, on produit un éclair ou un flux lumineux à l'intérieur du tube 10, qui est transformé en un flux lumineux diffus et sensiblement homogène et isotrope, guidé vers la surface de l'objet par la partie avant tronconique 38 du tube.

La lumière rétrodiffusée par l'objet est captée par le système optique de l'ensemble de mesure 16, les diamètres et distances focales des lentilles du premier doublet achromatique 24 étant tels que le système optique ne capte que la lumière rétrodiffusée, et non celle qui est réfléchie spéculairement par la surface de l'objet. Pour cela, le rapport $\Phi/f$ du diamètre $\Phi$ et de la distance focale f de la première lentille doit être inférieur à une valeur de l'ordre de 0,45. L'image de la surface de l'objet est reformée sur le diaphragme 28 par les doublets achromatiques 24, avec un grandissement égal à 1. L'orifice central du diaphragme 28 a un diamètre faible, de l'ordre de 1 mm dans le cas où l'on détermine la couleur d'une dent. Le diaphragme se trouve sensiblement au point focal du troisième doublet achromatique 24, qui transforme donc le flux lumineux issu de ce diaphragme en un faisceau de rayons sensiblement parallèles qui est partagé par les lames séparatrices 30 et le miroir 32 en sous-faisceaux parallèles dirigés vers les filtres interférentiels 34. Les signaux de sortie des photodétecteurs 36 placés derrière ces filtres interférentiels représentent donc les intensités de la lumière rétrodiffusée par l'objet aux longueurs d'onde sur lesquelles les filtres interférentiels sont accordés. Comme indiqué dans la Demande de Brevet antérieure précitée déposée par le Demandeur, ces longueurs d'onde correspondent aux maxima de sensibilité de l'oeil humain en teinte et en saturation et sont de préférence égales à 440, 495, 520 et 590 nm.

Simultanément, la lumière diffusée par le revêtement interne du tube 10 vient éclairer la plaquette 46 et la lumière rétrodiffusée par cette plaquette est analysée spectralement aux mêmes longueurs d'onde que la lumière rétrodiffusée par l'objet dont on veut déterminer la couleur.

Les signaux de sortie des photodétecteurs de l'ensemble de mesure 16 et de l'ensemble de calibration 18 sont préamplifiés, puis traités par la carte à microprocesseur 50 pour fournir les composantes spectrales de la lumière rétrodiffusée par l'objet, aux longueurs d'onde précitées.

Les signaux de sortie des photodétecteurs de l'ensemble 18 de calibrage sont pris en compte pour fournir des mesures qui sont indépendantes de la variation de puissance de la lampe 14, des dérives en température, etc., et qui peuvent de plus être automatiquement calibrées par rapport à un matériau étalon de référence, lorsque la plaquette 46 est en un matériau de référence dont on connaît avec précision les caractéristiques colorimétriques.

Les résultats des mesures sont affichés sur l'écran de visualisation dont le dispositif est équipé.

Lorsque les mesures sont réalisées sur des objets qui sont transparents, diffusants et absorbants, il importe de respecter certaines conditions pour que ces mesures soient précises et exactes.

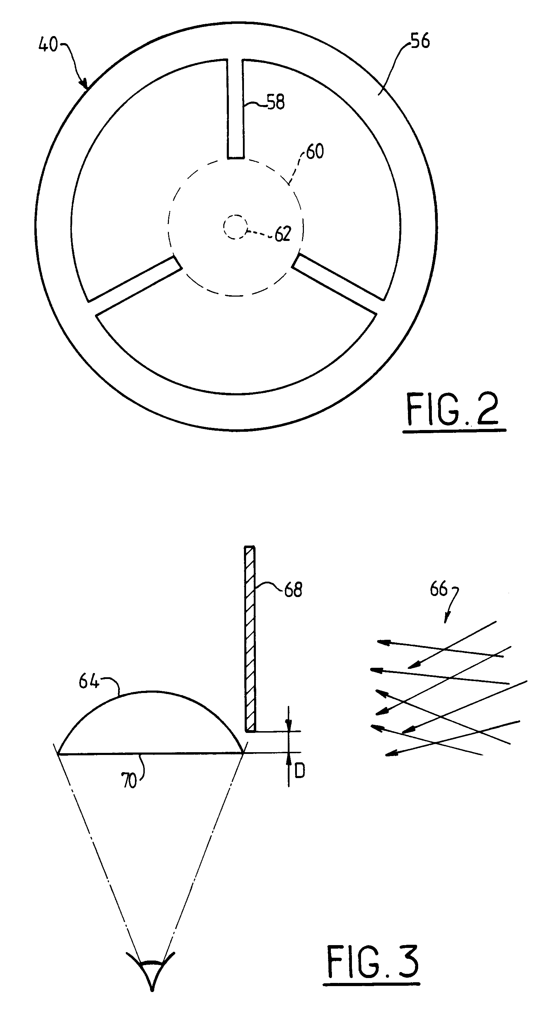

L'embout 40 dont est équipé le dispositif selon l'invention, et qui est représenté à plus grande échelle en figure 2, permet de respecter certaines de ces conditions.

L'embout 40 est réalisé en matière transparente et comprend une base cylindrique 56 de fixation sur l'extrémité avant ouverte du tube 10, et trois doigts 58 disposés à 120° les uns des autres et orientés en oblique vers l'avant pour converger sensiblement sur l'axe de l'embout 40, en délimitant entre leurs extrémités libres un cercle 60 qui définit une surface d'éclairement de l'objet. La zone visée par le système optique de l'ensemble de mesure 16 est représentée en figure 2 par un cercle 62, dont le diamètre correspond à celui de l'orifice central du diaphragme 28. Le diamètre de ce cercle 62 est d'environ 1 mm. Pour que les mesures soient exactes et précises, et en particulier pour que la zone visée 62 ne soit pas soumise à l'influence des effets de bord résultant de la diffusion et de l'absorption de la lumière à l'intérieur de l'objet, la surface éclairée 60 doit avoir un diamètre nettement supérieur à celui de la zone visée 62 et que l'on définit par la relation suivante :

$$d2 > d1 \ + \ 2 \, Dm$$

où d2 est le diamètre de la surface éclairée 60, d1 est le diamètre de la zone visée 62, et Dm est une valeur minimale du diamètre d'une surface d'éclairement de l'objet, cette valeur minimale étant déterminée expérimentalement comme cela va être décrit en référence en figure 3.

On procède de la façon suivante, en particulier dans le cas d'une dent (figure 3) :

On coupe longitudinalement ou axialement une dent naturelle 64, on éclaire par un flux lumineux diffus 66 la surface extérieure de la dent, on interpose un écran opaque 68 entre la surface extérieure de la dent et le flux lumineux 66, cet écran étant perpendiculaire au plan de la face coupée 70 de la dent et son bord avant étant à une distance D de ce plan, et on observe la face coupée 70 de la dent pour noter ses variations de couleur quand on fait varier D par déplacement de l'écran 68. On constate qu'il existe une valeur limite Dm de D qui est telle que :

- si D varie en dessous de Dm, on observe des variations de couleur sur la face coupée 70 de la dent,
- si D varie au-dessus de Dm, on n'observe plus de variations de couleur de la face coupée 70 de la dent. En d'autres termes, l'augmentation de la surface éclairée de la dent n'a alors plus d'effet sur la couleur de la face coupée de la dent, ce qui signifie que cette couleur n'est plus modifiable par la diffusion de la lumière dans la dent et par les effets de bord de la surface d'éclairement.

Dans le cas d'une dent naturelle, cette valeur minimale Dm est d'environ 2 mm.

Par la relation précitée, on détermine le diamètre de la surface d'éclairement 60 de l'objet à partir du diamètre choisi de la zone observée 62.

Dans le cas d'une dent, lorsque le diamètre de la zone observée 62 est d'environ 1 mm, on obtient une valeur de 5 mm pour le diamètre minimal de la surface éclairée 60.

Lorsqu'on veut déterminer expérimentalement la valeur minimale Dm précitée pour une famille d'objets dont la transparence peut varier d'un objet à l'autre, on fait cette détermination expérimentale sur l'objet le plus transparent de la famille.

Par ailleurs, il est avantageux, pour faciliter les mesures, que la surface interne de la partie avant du tube 10, qui forme la structure de guidage du flux d'éclairement de l'objet, soit à symétrie axiale de révolution, et que le système optique captant la lumière rétrodiffusée par l'objet soit coaxial à cette surface interne. La lampe 14 et l'ensemble de calibrage 18 sont également disposés sur l'axe du tube 10.

La lampe 14 peut être une lampe halogène, ou bien une lampe à éclair ou à décharge, émettant de préférence un flux lumineux approximativement équiénergétique sur le spectre visible.

De façon générale, l'invention permet une détermination précise et exacte de la couleur d'un objet transparent, diffusant et absorbant, et est applicable en particulier à la réalisation de prothèses dentaires.

## Revendications

1.   Procédé de détermination de la couleur d'un objet transparent, diffusant et absorbant, tel en particulier qu'une dent en bouche, consistant à éclairer une surface de l'objet par un flux lumineux polychromatique, à capter la lumière rétrodiffusée par l'objet et à analyser spectralement la lumière captée, caractérisé en ce qu'il consiste à utiliser un flux lumineux diffus sensiblement homogène et isotrope pour éclairer ladite surface de l'objet, à viser dans la surface éclairée (60) une zone (62) ayant des dimensions nettement inférieures à celles de la surface éclairée et approximativement centrée sur celle-ci, à former l'image de cette zone sur des moyens d'analyse spectrale (34, 36) et à déterminer l'intensité de la lumière rétrodiffusée par l'objet pour un nombre relativement faible de longueurs d'onde ayant des valeurs prédéterminées, correspondant en particulier aux maxima de sensibilité de l'oeil humain en teinte et en saturation.

2. Procédé selon la revendication 1, caractérisé en ce que les dimensions de la surface éclairée (60) et de la zone visée (62) satisfont à la relation d2 > d1 + 2Dm, où d2 est une dimension ou un diamètre de la surface éclairée, dl est une dimension correspondante ou un diamètre de la zone visée et Dm est une valeur minimale caractéristique de l'objet, Dm étant déterminée expérimentalement par observation des variations de couleur sur une coupe de celui-ci en fonction des variations de la dimension de la surface d'éclairement de l'objet.

3. Procédé selon la revendication 2, caractérisé en ce que, pour la détermination des couleurs d'objets de même nature, on détermine expérimentalement la valeur Dm précitée sur l'objet le plus transparent.

4. Procédé selon la revendication 2 ou 3, caractérisé en ce que, dans le cas d'une dent, la valeur Dm précitée est d'environ 2 mm.

5. Procédé selon l'une des revendications précédentes, caractérisé en ce que le diamètre dl de la zone visée (62) est d'environ 1 mm.

6. Procédé selon l'une des revendications précédentes, caractérisé en ce que le flux lumineux diffus d'éclairement est à symétrie axiale de révolution.

7. Procédé selon l'une des revendications précédentes, caractérisé en ce que l'axe du flux lumineux d'éclairement et l'axe du système optique (24, 28) captant la lumière rétrodiffusée par l'objet sont sensiblement confondus et perpendiculaires à la surface éclairée de l'objet.

8. Dispositif de détermination de la couleur d'un objet transparent, diffusant et absorbant, tel en particulier qu'une dent en bouche, comprenant des moyens d'éclairement d'une surface de l'objet par un flux lumineux polychromatique, des moyens de captation de la lumière rétrodiffusée par l'objet et des moyens d'analyse spectrale de la lumière captée, caractérisé en ce qu'il comprend un tube (10) à surface interne diffusante (42) dont une extrémité ouverte est destinée à être orientée vers l'objet à éclairer, une source lumineuse (14) logée dans le tube (10), un système optique (24, 28) agencé dans le tube au voisinage de son extrémité ouverte pour capter la lumière pénétrant dans le tube par cette extrémité et former une image d'une zone réduite (62) de la surface éclairée de l'objet sur les moyens (34, 36) d'analyse spectrale, ces derniers étant logés avec le système optique dans un boîtier disposé dans le tube (10) et formant un écran opaque interposé entre la source lumineuse (14) et l'extrémité ouverte du tube , le tube étant de plus muni d'une poignée (12) contenant des moyens (52, 54) d'alimentation et de commande de la source lumineuse.

9. Dispositif selon la revendication 8, caractérisé en ce que le système optique comprend, de l'extrémité ouverte du tube (10) aux moyens d'analyse spectrale, deux doublets achromatiques (24) entre lesquels sont disposés deux filtres (26) infrarouge et ultraviolet, puis un diaphragme (28) sur lequel est formée l'image de la surface éclairée de l'objet, un troisième doublet achromatique (24) recevant le flux lumineux passant par le diaphragme et générant un faisceau de rayons sensiblement parallèles, et un ensemble de lames séparatrices (30) suivies d'un miroir (32), orientés en oblique sur l'axe du système optique pour partager ledit faisceau de rayons parallèles en sous-faisceaux parallèles dirigés vers les moyens d'analyse spectrale.

10. Dispositif selon la revendication 9, caractérisé en ce que les moyens d'analyse spectrale comprennent des filtres interférentiels (34) qui sont chacun accordés sur une longueur d'onde déterminée et disposés sur le trajet d'un sous-faisceau précité, et des photodétecteurs (36) agencés en sortie des filtres interférentiels.

11. Dispositif selon l'une des revendications 8 à 10, caractérisé en ce que le tube (10) contient également des moyens (18) de calibrage, comprenant une plaquette (46) de matériau diffusant ou de référence, recevant la lumière diffusée par la surface interne du tube (10), et des moyens optiques et d'analyse spectrale sensiblement identiques aux moyens précités et recevant la lumière rétrodiffusée par ladite plaquette.

12. Dispositif selon l'une des revendications 8 à 11, caractérisé en ce qu'il comprend des circuits d'amplification et de traitement des signaux de sortie des moyens d'analyse spectrale.

**13.** Dispositif selon l'une des revendications 8 à 12, caractérisé en ce que le système optique (24, 28) précité est coaxial à l'extrémité ouverte du tube (10).

**14.** Dispositif selon l'une des revendications 8 à 13, caractérisé en ce que la surface interne du tube (10) est à symétrie axiale de révolution, la source lumineuse (14) étant disposée sur l'axe de symétrie de cette surface interne.

**15.** Dispositif selon l'une des revendications 8 à 14, caractérisé en ce qu'il comprend un embout amovible (40) en matériau transparent, comprenant une base (56) de fixation sur l'extrémité ouverte du tube (10) et des doigts obliques (58) convergents dont les extrémités libres sont destinées à être appliquées sur l'objet en délimitant entre elle ladite surface éclairée (60) de l'objet, et en délimitant également entre l'objet et le système optique une distance égale à la distance focale de la première lentille de ce système optique.

**16.** Dispositif selon l'une des revendications 8 à 15, caractérisé en ce que la première lentille du système optique (24, 28) a un diamètre $\Phi$ et une distance focale f déterminés pour que leur rapport $\Phi$/f soit inférieur à une valeur prédéterminée, évitant la reprise par le système optique du flux lumineux réfléchi spéculairement par l'objet.

## FIG.1

EP 0 604 276 A1

FIG.2

FIG.3

**Office européen des brevets**

# RAPPORT DE RECHERCHE EUROPEENNE

Numero de la demande

EP 93 40 3057

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| Y | EP-A-0 367 647 (BERTIN) 9 Mai 1990<br>* colonne 2 - colonne 5 * | 1,8 | G01N21/47<br>G01J3/51 |
| A | COL.3;L.35-45 | 15 | |
| Y | EP-A-0 279 191 (CARL ZEISS) 24 Août 1988<br>* colonne 1 - colonne 4 * | 1,8 | |
| A | MEME PASSAGE | 2,6,7 | |
| A | PATENT ABSTRACTS OF JAPAN<br>vol. 2, no. 139 (E-78)17 Novembre 1978<br>& JP-A-53 107 383 (MATSUSHITA DENKI) 19<br>Septembre 1978<br>* abrégé * | 1,8,10 | |
| A | EP-A-0 209 860 (CARL ZEISS) 18 Juillet 1986<br>* page 2 - page 3; figures 1,2 * | 1,2,8 | |
| A | US-A-3 383 979 (GIBSON) 21 Mai 1968 | 1,8,14 | |
| A | US-A-4 022 534 (KISHNER) 10 Mai 1977 | 1,8,13 | DOMAINES TECHNIQUES RECHERCHES (Int.Cl.5) |
| A | US-A-3 526 777 (ROBINSON) 1 Septembre 1970 | 1,8 | G01N<br>G01J |
| A | DE-A-25 37 089 (ORIGINAL HANAU) 24 Février 1977<br>* page 4 - page 5; figure 3 * | 1 | |

Le présent rapport a été établi pour toutes les revendications

| Lieu de la recherche | Date d'achèvement de la recherche | Examinateur |
|---|---|---|
| LA HAYE | 31 Mars 1994 | Boehm, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)